# EUROPÄISCHE PATENTANMELDUNG

(11) **EP 3 511 063 A1**
(43) Veröffentlichungstag der Anmeldung: **17.07.2019**
(21) Anmeldenummer: 18210639.3
(22) Anmeldetag: 06.12.2018
(51) Int. Cl.: B01D 3/32

(54) **KOLONNENEINBAUTENBEFESTIGUNGSWINKEL ZUR REGELUNG DES ABSTANDS ZWISCHEN ZWEI KOLONNENBODEN**

(30) Priorität: 11.01.2018 DE 102018100573
(71) Anmelder: RVT Process Equipment GmbH, 96349 Steinwiesen (DE)
(72) Erfinder: Schlimper, Stefan, 45768 Marl (DE); Pechtold, Benjamin, 98743 Gräfenthal (DE); Gertloff, Andreas, 96342 Stockheim (DE)
(74) Vertreter: Grünecker Patent- und Rechtsanwälte PartG mbB

(57) **Zusammenfassung**

Die vorliegende Erfindung betrifft einen Bausatz zum Einbau von zwei Kolonnenböden in eine Kolonne mit einem oberen Kolonnenboden, der mindestens einen ersten Ablaufschacht mit mindestens einer Ablaufschachtwand aufweist, und mit einem unteren Kolonnenboden, der vertikal beabstandet unter dem oberen Kolonnenboden angeordnet und mit diesem verbunden ist. Es ist die Aufgabe der vorliegenden Erfindung, einem Bausatz bereitzustellen, der eine einfache, exakte und stabile Montage der Kolonnenböden in der Kolonne ermöglicht. Hierzu ist erfindungsgemäß vorgesehen, dass der Bausatz ferner mindestens einen Kolonneneinbautenbefestigungswinkel mit mindestens einer ersten Befestigungsstelle, mindestens einer zweiten Befestigungsstelle und einer Einstellungseinrichtung zum Einstellen eines vertikalen Abstandes zwischen der mindestens einen ersten Befestigungsstelle und der mindestens einen zweiten Befestigungsstelle umfasst, wobei der Kolonneneinbautenbefestigungswinkel mit der mindestens einen ersten Befestigungsstelle an der Ablaufschachtwand befestigt ist und mit der mindestens einen zweiten Befestigungsstelle mit dem unteren Kolonnenboden verbunden ist. Ferner betrifft die vorliegende Erfindung auch einen Kolonneneinbautenbefestigungswinkel zur Verwendung in dem oben beschriebenen Bausatz und eine Kolonne mit mindestens einem darin befestigten derartigen Bausatz.

## Beschreibung

Die vorliegende Erfindung betrifft einen Bausatz zum Einbau von zwei Kolonnenböden in eine Kolonne mit einem oberen Kolonnenboden, der mindestens einen Ablaufschacht mit mindestens einer Ablaufschachtwand aufweist, und mit einem unteren Kolonnenboden, der vertikal beabstandet unter dem oberen Kolonnenboden angeordnet und mit diesem verbunden ist.

Ferner betrifft die vorliegende Erfindung auch einen Kolonneneinbautenbefestigungswinkel zur Verwendung in dem Bausatz und eine Stoffaustauschkolonne mit mindestens einem im Kolonneninneren befestigten Bausatz.

Kolonnen, insbesondere Stoffaustauschkolonnen, werden für Rektifikation, Absorption, Desorption und zur Wärmeübertragung in der Prozessindustrie, also beispielsweise der Chemie, der Petrochemie, im Raffineriebereich sowie in der Umwelttechnik verwendet. In den Kolonnen werden zwei Medien, üblicherweise ein Gas und eine Flüssigkeit, miteinander in Kontakt gebracht. Das Gas strömt dabei von unten nach oben durch die Kolonne, die Flüssigkeit strömt von oben nach unten durch die Kolonne. Um eine hohe Stoffaustauschleistung in diesen Apparaten zu erzielen, muss eine große Grenzfläche zwischen den Phasen realisiert werden. Dazu haben sich in der industriellen Praxis verschiedene Grundtypen von Kontaktelementen etabliert: Kolonnenböden, z.B. Sieb-, Ventil-, oder Glockenböden, regellose Füllkörperschüttungen sowie geordnete Packungen.

Kolonnenböden bieten gegenüber geordneten Packungen und Füllkörpern den Vorteil, dass sich bei Bedarf eine große Anzahl von Seitenabzügen und Zuläufen kostengünstig realisieren lassen. Bei Verschmutzungen und Verkrustungen führt der Einsatz von Kolonnenböden zu Anlagen mit hoher Standzeit und geringem Reinigungsaufwand. Die Kolonnenböden werden waagerecht in die Kolonne eingesetzt und dienen dazu, das Gas und die Flüssigkeit miteinander in Kontakt zu bringen. Jeder der Kolonnenböden weist mindestens einen Ablaufschacht auf, über den die in horizontaler Richtung über den Kolonnenboden strömende Flüssigkeit in vertikaler Richtung nach unten abgelenkt und auf den darunterliegenden Kolonnenboden geleitet wird. Auf diesem darunterliegenden Kolonnenboden strömt die Flüssigkeit wieder in horizontaler Richtung über die gesamte Bodenfläche zu dem mindestens einen weiteren Ablaufschacht und verlässt dort den Kolonnenboden nach unten. In jedem Kolonnenboden sind ferner Gaseintrittsöffnungen vorgesehen, durch die das Gas von unten nach oben, also in vertikaler Richtung, in der Kolonne aufsteigt. Auf den Kolonnenböden, den sogenannten Kreuzstromböden, kreuzen sich das Gas und die Flüssigkeit und kommen so miteinander in Kontakt.

Um eine gute Trennleistung zu erbringen, müssen die Kolonnenböden in den Kolonnen in horizontaler Richtung möglichst exakt ausgerichtet sein. Dadurch wird eine möglichst gleichmäßige Flüssigkeitsverteilung über der gesamten Bodenfläche erreicht. Üblicherweise sind im Inneren der Kolonne an der Kolonnenwand Tragringe angebracht, beispielsweise angeschweißt, auf denen die Kolonnenböden entlang ihres Umfangs aufliegen. Sind diese Tragringe mit zu großer Toleranz eingebaut, so können starke Abweichungen der horizontalen Position der Kolonnenböden auftreten und es ist nicht möglich, die Kolonnenböden in horizontaler Richtung exakt auszurichten. Zudem ist es bekannt, dass - vor allem bei großen Kolonnendurchmessern - ein Durchhängen der Kolonnenböden auftreten kann. Auch in diesem Fall weisen die Kolonnenböden kein einheitliches horizontales Niveau über ihre gesamte Fläche auf. Es ist dann keine gleichmäßige Flüssigkeitsverteilung auf dem Kolonnenboden möglich und die Trennleistung der Kolonne verschlechtert sich.

Es ist bereits bekannt, Toleranzabweichungen durch Nachbessern, beispielsweise durch das Anbringen von Schweißteilen zu beheben. Zur Erhöhung der Stabilität der Kolonnenböden und damit zur Vermeidung des Durchhängens ist es ferner bekannt die Kolonnenböden mit zusätzlichen Trägern zu versteifen. Beides führt allerdings zu erhöhten Montage- und Materialkosten.

Aus der US 2013/0234348 A1 ist bereits ein Bausatz für die Verbindung von zwei Kreuzstromböden mit einer Stützkonstruktion bekannt. Der Bausatz umfasst einen oberen Kreuzstromboden mit zwei seitlichen Ablaufschächten und einen unteren Kreuzstromboden mit einem mittigen Ablaufschacht. Der mittige Ablaufschacht umfasst zwei Ablaufschachtwände, die mit in einem oberen Bereich des Schachtes angebrachten Querbändern verbunden sind. Ausgehend von jedem Querband erstreckt sich eine Strebe nach oben. Am oberen Ende der Streben ist ein Querträger angeordnet, auf dem der obere Kreuzstromboden befestigt ist. Der untere Kreuzstromboden ist an weiteren Querträgern befestigt, die an den Außenseiten der Schachtwände des mittigen Ablaufschachts angebracht sind. Zudem können im unteren Bereich des Ablaufschachts weitere Querbänder angeordnet sein, die mit dem oberen Kreuzstromboden eines weiteren Bausatzes verbunden sind. Durch diese weiteren Querbänder wird der mittige Ablaufschacht gestützt und der gewünschte Abstand zwischen dem Ablaufschacht und dem darunterliegenden Kreuzstromboden eingehalten. Bei dieser Konstruktion bilden die mittigen Ablaufschächte mit den darüber liegenden Kreuzstromböden also eine Art Säule aus, die sich durch die gesamte Kolonne bzw. durch alle Kreuzstromböden erstreckt.

Es ist die Aufgabe der vorliegenden Erfindung, einen Bausatz zum Einbau von mindestens zwei Kolonnenböden in eine Kolonne bereitzustellen, der die aus dem Stand der Technik bekannten Nachteile vermeidet und insbesondere eine einfache und genaue horizontale Ausrichtung und Befestigung der Kolonnenböden im Kolonneninneren ermöglichen.

Hierzu ist erfindungsgemäß vorgesehen, dass der Bausatz mindestens einen Kolonneneinbautenbefestigungswinkel mit mindestens einer ersten Befestigungsstelle, mindestens einer zweiten Befestigungsstelle und einer Einstelleinrichtung zum Einstellen eines vertikalen Abstands zwischen der mindestens einen ersten Befestigungsstelle und der mindestens einen zweiten Befestigungsstelle umfasst, der mit der mindestens einen ersten Befestigungsstelle an der Ablaufschachtwand des Ablaufschachts des oberen Kolonnenbodens befestigt ist und mit der mindestens einen unteren Befestigungsstelle mit dem zweiten Kolonnenboden verbunden ist.

Hierdurch wird zusätzlich eine Verbindung zwischen den Kolonnenböden und der Ablaufschachtwand geschaffen. Üblicherweise ist die Ablaufschachtwand fest mit der Kolonne verbunden. Die Verbindung des unteren Kolonnenbodens mit der Ablaufschachtwand führt zu einer Stabilisierung des Bausatzes, sodass auf zusätzliche Unterstützungsträger für die Kolonnenböden verzichtet werden kann. Selbstverständlich können zwei Bausätze miteinander verbunden werden, wobei in diesem Fall der untere Kolonnenboden des oberen Bausatzes den oberen Kolonnenboden für den ersten (d. h. den oberen) Kolonnenboden des unteren Bausatzes darstellt. Durch die Einstelleinrichtung ist die Position des unteren Kolonnenbodens einstellbar, so dass Höhenunterschiede im Kolonnenboden ausgeglichen werden können, sowohl bei der Erstmontage des Bausatzes in der Kolonne als auch im eingebauten Zustand, zum Beispiel zur Reparatur. So kann ein durchhängender Kolonnenboden nach oben gezogen und wieder in die Horizontale gebracht werden. Auch der Ausgleich von unterschiedlichen Höhen des Tragrings ist möglich. Beispielsweise kann vorgesehen sein, dass die vertikale Position der mindestens einen ersten und der mindestens einen zweiten Befestigungsstelle einstellbar ist, sodass ein gewünschter vertikaler Abstand zwischen der mindestens einen ersten und der mindestens einen zweiten Befestigungsstelle eingestellt werden kann. Der Kolonnenboden kann so in der Horizontalen nivelliert werden.

In einer weiteren Ausführungsform kann vorgesehen werden, dass eine vertikale Position der mindestens einen ersten Befestigungsstelle oder der mindestens einen zweiten Befestigungsstelle des Kolonneneinbautenbefestigungswinkel festgelegt ist und die jeweils mindestens eine andere Befestigungsstelle des Kolonneneinbautenbefestigungswinkel in vertikaler Richtung verschiebbar ist. Somit ist also die mindestens eine erste oder die mindestens eine zweite Befestigungsstelle fest im Kolonneneinbautenbefestigungswinkel angeordnet und lediglich die vertikale Position der mindestens einen anderen Befestigungsstelle ist einstellbar. Die verschiebbare Befestigungsstelle wird also in die gewünschte vertikale Position gebracht und dort fixiert. Dadurch ist eine sehr einfache Einstellung des vertikalen Abstands zwischen den beiden Befestigungsstellen möglich.

Hierzu kann beispielsweise vorgesehen sein, dass die Einstelleinrichtung des Kolonneneinbautenbefestigungswinkels mindestens ein erstes Element aufweist, auf dem mindestens ein zweites Element in vertikaler Richtung verschiebbar angeordnet ist, und das mindestens eine zweite Element in verschiedenen vertikalen Positionen feststellbar ist. Das erste Element ist fest mit dem Kolonneneinbautenbefestigungswinkel verbunden, das zweite Element wird mit dem unteren Kolonnenboden verbunden, in die gewünschte Position gebracht und in dieser Position fixiert, so dass der untere Kolonnenboden in der gewünschten horizontalen Ausrichtung ist.

Vorzugsweise kann die Einstelleinrichtung mindestens eine vertikal angeordnete Schraube umfassen, auf der mindestens zwei Muttern angeordnet sind. Dadurch wird eine sehr einfache Ausgestaltung möglich. Die Schraube wird durch auf dem unteren Kolonnenboden vorgesehene Löcher für Befestigungsschrauben geführt und über die zwei Muttern wird die gewünschte horizontale Position des unteren Kolonnenbodens eingestellt.

In noch einer weiteren Ausführungsform kann vorgesehen werden, dass auch die horizontale Position der mindestens einen ersten Befestigungsstelle und/oder der mindestens einen zweiten Befestigungsstelle des Kolonneneinbautenbefestigungswinkels einstellbar ist. Hierdurch ist es möglich, in horizontaler Richtung die zusätzliche Unterstützung durch den Kolonneneinbautenbefestigungswinkel an der benötigten Stelle des jeweiligen Kolonnenbodens anzubringen. Beispielsweise können die Befestigungsstellen als Schlitze, insbesondere Langlöcher, in dem Kolonneneinbautenbefestigungswinkel ausgebildet sein. Zur Befestigung des Kolonneneinbautenbefestigungswinkels an den Kolonnenböden bzw. den Ablaufschachtwänden werden Schrauben durch die Schlitze bzw. Langlöcher gesteckt und in in den Kolonnenböden bzw. den Ablaufschachtwänden vorgesehenen Öffnungen gesteckt oder geschraubt. Vor der festen Verschraubung kann der Kolonneneinbautenbefestigungswinkel in horizontaler Richtung verschoben werden, bis die gewünschte Position erreicht ist. Anschließend werden die Schrauben komplett fest gezogen.

Es kann auch vorgesehen werden, dass der Kolonneneinbautenbefestigungswinkel mehrere erste und/oder mehrere zweite Befestigungsstellen aufweist. Dadurch wird der Kolonneneinbautenbefestigungswinkel jeweils an mehreren Stellen mit dem oberen Kolonnenboden bzw. dem Ablaufschacht des oberen Kolonnenbodens und/oder mit dem unteren Kolonnenboden verbunden. Dies führt zu einer zusätzlichen Stabilität, die den Verzicht auf Querträger zur Unterstützung der Kolonnenböden ermöglicht. In diesem Fall können alle ersten und zweiten Befestigungsstellen in horizontaler und/oder vertikaler Richtung verschiebbar sein.

Gemäß noch einer weiteren Ausführungsform kann vorgesehen sein, dass der Kolonneneinbautenbefestigungswinkel einen Rücken und mindestens einen mit dem Rücken verbundenen Schenkel umfasst, wobei die mindestens eine erste Befestigungsstelle im Rücken und die mindestens eine zweite Befestigungsstelle am Schenkel des Kolonneneinbautenbefestigungswinkels ausgebildet ist. Vorzugsweise sind der Rücken und der mindestens eine Schenkel des Kolonneneinbautenbefestigungswinkels einteilig ausgebildet, wobei der Schenkel mit dem Rücken einen Winkel einschließt. Dadurch erhält der Kolonneneinbautenbefestigungswinkel eine höhere Stabilität. Es kann auch vorgesehen sein, dass der Kolonneneinbautenbefestigungswinkel zwei Schenkel aufweist, die parallel zueinander angeordnet sind und mit dem Rücken jeweils einen rechten Winkel einschließen. Hierdurch wird nochmals eine höhere Stabilität erreicht. Der Kolonneneinbautenbefestigungswinkel kann sehr einfach hergestellt werden, beispielsweise als Blechbiegeteil. Dennoch ist eine hohe Stabilität vorhanden.

Ferner kann im Rücken des Kolonneneinbautenbefestigungswinkels eine Aussparung zur Aufnahme einer Längsstrebe ausgebildet sein. In diesem Fall ist an der Ablaufschachtwand des Ablaufschachts des ersten Kolonnenbodens eine Längsstrebe angebracht, auf die der Kolonneneinbautenbefestigungswinkel aufgesteckt und anschließend an der mindestens einen ersten Befestigungsstelle fixiert wird. Auch dies führt zu einer erhöhten Stabilität des Bausatzes.

In noch einer weiteren Ausführungsform kann vorgesehen sein, dass der mindestens eine Schenkel des Kolonneneinbautenbefestigungswinkels mit zwei beabstandet zueinander angeordneten horizontalen Trägern verbunden ist, die einen Teil der mindestens einen zweiten Befestigungsstelle ausbilden. Vorzugsweise weist der Kolonneneinbautenbefestigungswinkel hierzu zwei Aufnahmen auf, in die die horizontalen Träger einfach eingesteckt sind. Die horizontalen Träger können dann noch fest mit dem Kolonneneinbautenbefestigungswinkel verbunden, beispielsweise verschweißt, werden. Zwischen den horizontalen Trägern ist dann ein Schlitz ausgebildet. In den Schlitz kann mindestens eine Schraube eingesteckt werden, auf der die zwei Muttern angeordnet sind. Der untere Kolonnenboden liegt zwischen den beiden Muttern, so dass über eine Verstellung der Position der Muttern auf der Schraube die horizontale Position des zweiten Kolonnenbodens eingestellt wird. Die Träger mit dem dazwischen ausgebildeten Schlitz und die Schraube mit den zwei Muttern bilden mindestens eine zweite Befestigungsstelle aus.

Vorzugsweise kann ferner vorgesehen sein, dass der untere Kolonnenboden mit einer Mehrzahl von Kolonneneinbautenbefestigungswinkeln an der Ablaufschachtwand befestigt ist. Auch hierdurch wird nochmals eine erhöhte Stabilität des Bausatzes erreicht.

Bevorzugterweise kann weiter vorgesehen sein, dass der mindestens eine Ablaufschacht mittig im oberen Kolonnenboden angeordnet ist und zwei Ablaufschachtwände aufweist, und dass an jeder Ablaufschachtwand jeweils mindestens ein Kolonneneinbautenbefestigungswinkel angeordnet ist. Die Kolonnenböden sind dann als mehrflutige Kolonnenböden ausgebildet, was insbesondere bei großen Kolonnendurchmessern Vorteile hinsichtlich einer gleichmäßigen Flüssigkeitsverteilung und somit eines guten Stoffaustausches bringt. Dadurch, dass der untere Kolonnenboden an zwei Ablaufschachtwänden befestigt ist, wird die Stabilität nochmals erhöht.

Noch einer weiteren Erhöhung der Stabilität kann dadurch erzielt werden, dass im Inneren des mindestens einen Ablaufschachts mindestens eine Querstrebe angeordnet ist und jeder Kolonneneinbautenbefestigungswinkel in Verlängerung einer Querstrebe an einer Außenseite der mindestens einen Ablaufschachtwand befestigt ist.

In noch einer weiteren Ausführungsform kann vorgesehen sein, dass die Kolonnenböden unterhalb des Ablaufschachtes eine vertiefte Einlaufzone ausbilden. Dies kann sowohl beim oberen Kolonnenboden als auch beim unteren Kolonnenboden der Fall sein. Die vertiefte Einlaufzone wird auch als Einlauftasse bezeichnet. Dadurch kann eine materialeffiziente Bauweise der Kolonnenböden realisiert werden, die aber üblicherweise mit einem Festigkeitsverlust einhergeht. Dieser Festigkeitsverlust wird durch die Befestigung des jeweiligen unteren Kolonnenbodens an der Ablaufschachtwand/den Ablaufschachtwänden des Ablaufschachtes des jeweiligen oberen Kolonnenbodens mittels der Kolonneneinbautenbefestigungswinkel kompensiert.

Weiterhin kann vorgesehen werden, dass der mindestens eine Ablaufschacht an seinen der Kolonne zugewandten Enden Befestigungspunkte zur Befestigung an der Kolonne aufweist. So können zum Beispiel Löcher in der Ablaufschachtwand/den Ablaufschachtwänden vorgesehen sein, mit denen der Ablaufschacht an Leisten verschraubt wird, die im Inneren der Kolonne fest an der Kolonne angebracht sind, beispielsweise angeschweißt. Der Ablaufschacht übernimmt dann eine tragende und stabilisierende Funktion, die Kolonnenböden sind nicht mehr nur über ihren Umfang an der Kolonnenwand befestigt.

Ferner bezieht sich die Erfindung auch auf einen Kolonneneinbautenbefestigungswinkel mit mindestens einer ersten Befestigungsstelle zur Befestigung an einem oberen Kolonnenboden, mindestens einer zweiten Befestigungsstelle zur Befestigung an einem unteren Kolonnenboden und einer Einstelleinrichtung zum Einstellen eines vertikalen Abstands zwischen der mindestens einen ersten Befestigungsstelle und der mindestens einen zweiten Befestigungsstelle zur Verwendung in einem Bausatz nach einem der Ansprüche 1-14. Dieser Kolonneneinbautenbefestigungswinkel ermöglicht eine sehr einfache Befestigung des jeweils unteren Kolonnenbodens an dem Ablaufschacht des jeweils oberen Kolonnenbodens, wodurch eine höhere Stabilität des gesamten Bausatzes erreicht wird. Durch die Einstellungseinrichtung zum Einstellen des vertikalen Abstands zwischen den beiden Befestigungsstellen können sehr einfach bei der Fertigung auftretende Toleranzschwankungen ausgeglichen werden und der Kolonnenboden kann in horizontaler Richtung nivelliert werden, sodass eine gleichmäßige Flüssigkeitsströmung über dem Kolonnenboden erzielt wird.

Zudem bezieht sich die Erfindung auch auf eine Stoffaustauschkolonne mit mindestens einem im Kolonneninneren befestigten Bausatz wie oben beschrieben. Selbstverständlich können auch mehrere Bausätze übereinander in der Kolonne befestigt werden. Dabei ist auch möglich, die Bausätze in der bereits beschriebenen Weise mit Hilfe der Kolonneneinbautenbefestigungswinkel miteinander zu verbinden und so die Stabilität zu erhöhen. Dabei entspricht der untere Kolonnenboden des oberen Bausatzes dem vorstehend "oberer Kolonnenboden" bezeichnetem Kolonnenboden und der obere Kolonnenboden des unteren Bausatzes entspricht dem vorstehend "unterer Kolonnenboden" bezeichneten Kolonnenboden. Der obere Kolonnenboden des unteren Bausatzes wird also an Ablaufschachtwänden des/der Ablaufschächte des unteren Kolonnenbodens des oberen Bausatzes befestigt.

Im Folgenden wird die Erfindung anhand von Figuren näher erläutert. Es zeigen
Fig. 1 schematische Darstellung eines erfindungsgemäßen Bausatzes,
Fig. 2 perspektivische Darstellung eines ersten Kolonnenbodens mit einem mittigen Ablaufschacht aus einem Bausatz gemäß Fig. 1,
Fig. 3 perspektivische Darstellung eines zweiten Kolonnenbodens mit zwei seitlichen Ablaufschächten aus einem Bausatz gemäß Fig. 1,
Fig. 4 Kolonneneinbautenbefestigungswinkel aus einem Bausatz gemäß Fig. 1,
Fig. 5 Seitenansicht eines kompletten Bausatzes gemäß Fig. 1 im eingebauten Zustand zur Korrektur eines schiefen Tragrings, und
Fig. 6 Seitenansicht eines kompletten Bausatzes gemäß Fig. 1 im eingebauten Zustand zur Korrektur eines durchhängenden Kolonnenbodens.

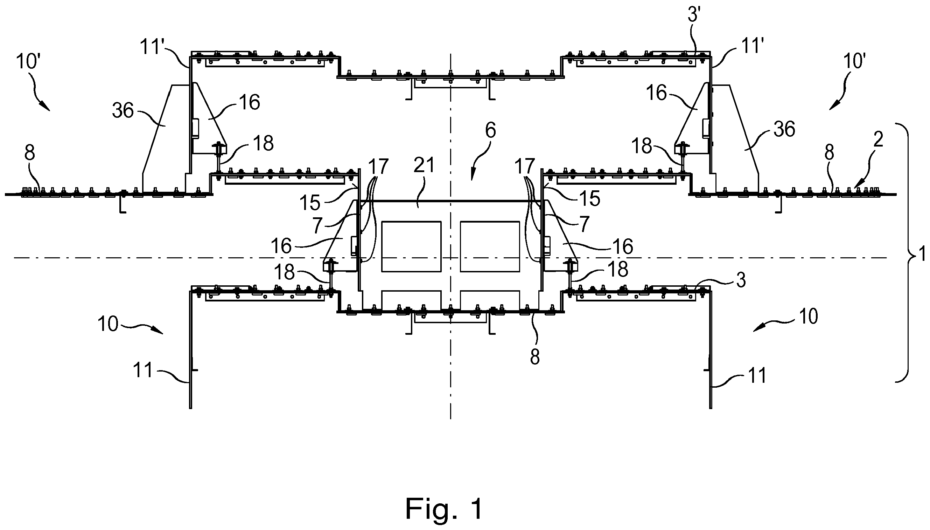

Fig. 1 zeigt einen Bausatz 1 zum Einbau eines oberen Kolonnenbodens 2 und eines unteren Kolonnenbodens 3 in eine Kolonne. Zudem ist der untere Kolonnenboden 3' eines darüber angeordneten weiteren Bausatzes zu sehen. Der obere Kolonnenboden 2 weist einen zentralen Ablaufschacht 6 mit zwei Ablaufschachtwänden 7 auf. In dem zentralen Ablaufschacht 6 sind Querstreben 21 angeordnet, die die beiden Ablaufschachtwände 7 miteinander verbinden. An den Außenseiten 15 der Ablaufschachtwände 7 sind Kolonneneinbautenbefestigungswinkel 16 angebracht. Die Kolonneneinbautenbefestigungswinkel 16 sind mit ersten Befestigungsstellen 17 an den Außenseiten 15 der Ablaufschachtwände 7 des zentralen Ablaufschacht 6 und damit an dem oberen Kolonnenboden 2 befestigt. Es wäre aber ebenso möglich, die Kolonneneinbautenbefestigungswinkel an den Innenseiten der Ablaufschächte zu befestigen. Zudem weisen die Kolonneneinbautenbefestigungswinkel 16 zweite Befestigungsstellen 18 auf, über die sie mit dem zweiten Kolonnenboden 3 verbunden sind. Im Bereich des zentralen Ablaufschachts 6 weist der zweite Kolonnenboden 3 eine vertiefte Einlaufzone 8, eine sogenannte Einlauftasse auf, die im Vergleich zum restlichen Boden abgesenkt ist. Diese Einlauftasse muss nicht vorgesehen werden. Der zweite Kolonnenboden 3 weist zwei seitliche Ablaufschächte 10 mit je einer Ablaufschachtwand 11 auf. Wie in Fig. 1 anhand des oben dargestellten zweiten Kolonnenbodens 3' eines weiteren Bausatzes gezeigt ist, sind an den Außenseiten der Ablaufschachtwände 11' der seitlichen Ablaufschächte 10' ebenfalls Kolonneneinbautenbefestigungswinkel 16 angebracht, die über zweite Befestigungsstellen 18 jeweils mit dem darunterliegenden oberen Kolonnenboden 2 des vollständig dargestellten unteren Bausatzes 1 verbunden sind. Es wäre aber ebenso möglich, die Kolonneneinbautenbefestigungswinkel an den Innenseiten der Ablaufschächte zu befestigen. In die seitlichen Ablaufschächte 10' ragen Verstärkungsstützen 36 hinein, die eine Verlängerung der Kolonneneinbautenbefestigungswinkel 16 ausbilden. Der obere Kolonnenboden 2 weist im Bereich der seitlichen Ablaufschächte 10' ebenfalls vertiefte Einlaufzonen 8 auf.

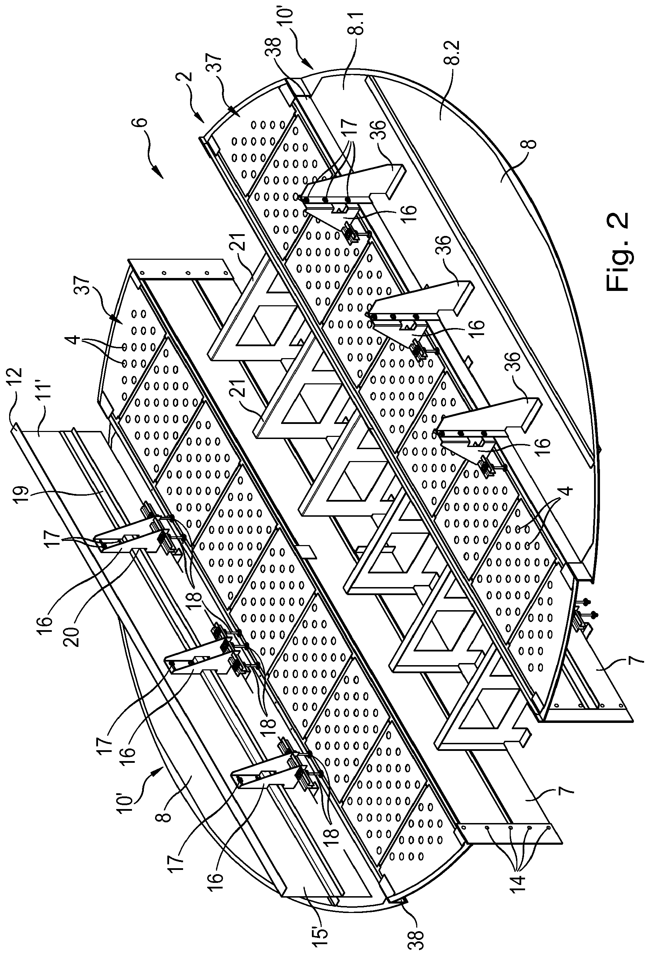

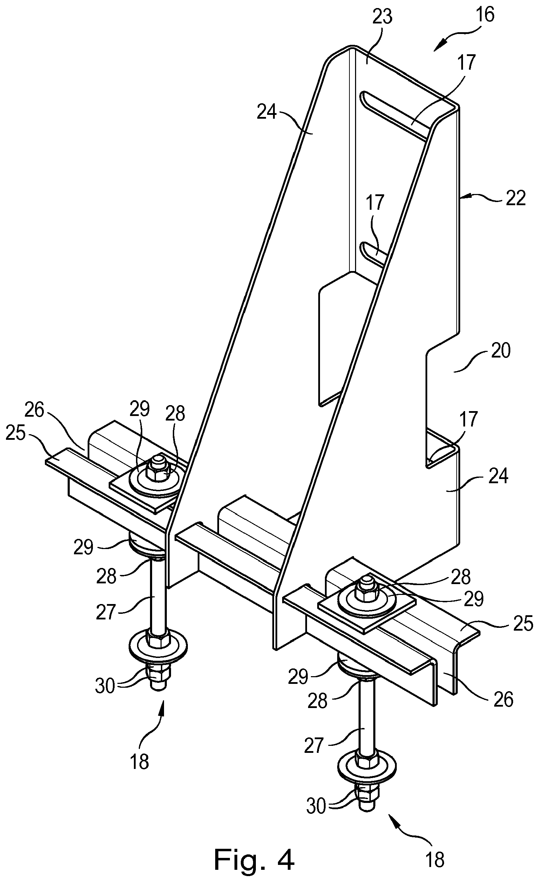

In Fig. 2 ist der obere Kolonnenboden 2 des Bausatzes 1 aus Fig. 1 in perspektivische Darstellung gezeigt. Zudem ist eine Ablaufschachtwand 11' eines seitlichen Ablaufschachts 10' des unteren Kolonnenbodens eines darüber angeordneten Bausatzes gezeigt. Im Bereich des zweiten seitlichen Ablaufschacht 10' des unteren Kolonnenbodens des darüber angeordneten Bausatzes sind lediglich die Kolonneneinbautenbefestigungswinkel 16 sowie die Verstärkungsstützen 36 gezeigt. Wie bereits beschrieben, weist der obere Kolonnenboden 2 im Bereich der seitlichen Ablaufschächte 10' vertiefte Einlaufzonen 8 auf. Die vertieften Einlaufzonen 8 sind jeweils aus zwei Segmenten 8.1, 8.2 zusammengesetzt. An die vertieften Einlaufzonen 8 schließen sich Stoffaustauschbereiche 37 des oberen Kolonnenbodens 2 an. Die Stoffaustauschbereiche 37 des oberen Kolonnenbodens 2 sind ebenfalls aus einzelnen Segmenten zusammengesetzt. Die Stoffaustauschbereiche 37 des oberen Kolonnenbodens 2 sind als Siebboden ausgebildet und weisen Gasdurchtrittsöffnungen 4 auf, durch die von unten nach oben durch die Kolonne strömendes Gas hindurch strömen kann. Die beiden Stoffaustauschbereiche 37 des oberen Kolonnenbodens 2 münden in den zentralen Ablaufschacht 6. Der zentrale Ablaufschacht 6 wird durch die beiden Ablaufschachtwände 7 ausgebildet, die beabstandet zueinander angeordnet sind. In dem zentralen Ablaufschacht 6 sind die Querstreben 21 angeordnet, die zu einer Stabilisierung führen. An den seitlichen Enden 13 des zentralen Ablaufschachts 6 bzw. der Ablaufschachtwände 7 des zentralen Ablaufschachts 6 kann der Ablaufschacht 6 bzw. können die Ablaufschachtwände 7 mit der Kolonne verbunden werden, beispielsweise durch Verschweißen oder Verschraubungen. Bei dem Einbau der Ablaufschachtwände 7 in die Kolonne wird jede Ablaufschachtwand 7 in horizontaler Richtung nivelliert. Der obere Kolonnenboden 2 liegt auf den Ablaufschachtwänden 7 des zentralen Ablaufschacht 6 auf und ist daher auch in horizontaler Richtung nivelliert. Zudem ist der obere Kolonnenboden 2 mithilfe von jeweils drei Kolonneneinbautenbefestigungswinkel 16 an den Außenseiten 15' der Ablaufschachtwände 11' der seitlichen Ablaufschächte 10' des unteren Kolonnenbodens eines darüberliegenden Bausatzes befestigt. Dazu weisen die Kolonneneinbautenbefestigungswinkel 16 mindestens eine erste Befestigungsstelle 17 auf, mit der die Kolonneneinbautenbefestigungswinkel 16 an der Ablaufschachtwand 11' des seitlichen Ablaufschachts 10' befestigt sind. In Fig. 2 weisen die Kolonneneinbautenbefestigungswinkel drei erste Befestigungsstellen 17 auf. Ferner weisen die Kolonneneinbautenbefestigungswinkel 16 zweite Befestigungsstellen 18 auf, mit denen sie mit dem oberen Kolonnenboden 2 verbunden sind. Es ist mindestens eine zweite Befestigungsstelle 18 vorgesehen. In dem in Fig. 2 gezeigten Beispiel weist der mittlere Kolonneneinbautenbefestigungswinkel 16 drei zweite Befestigungsstellen 18 auf, die beiden äußeren Kolonneneinbautenbefestigungswinkel 16 weisen jeweils zwei zweite Befestigungsstellen 18 auf. Die Anzahl der Kolonneneinbautenbefestigungswinkel kann variieren und an den jeweiligen Anwendungsfall angepasst werden. Die Kolonneneinbautenbefestigungswinkel werden später unter Bezug auf Fig. 4 näher beschrieben.

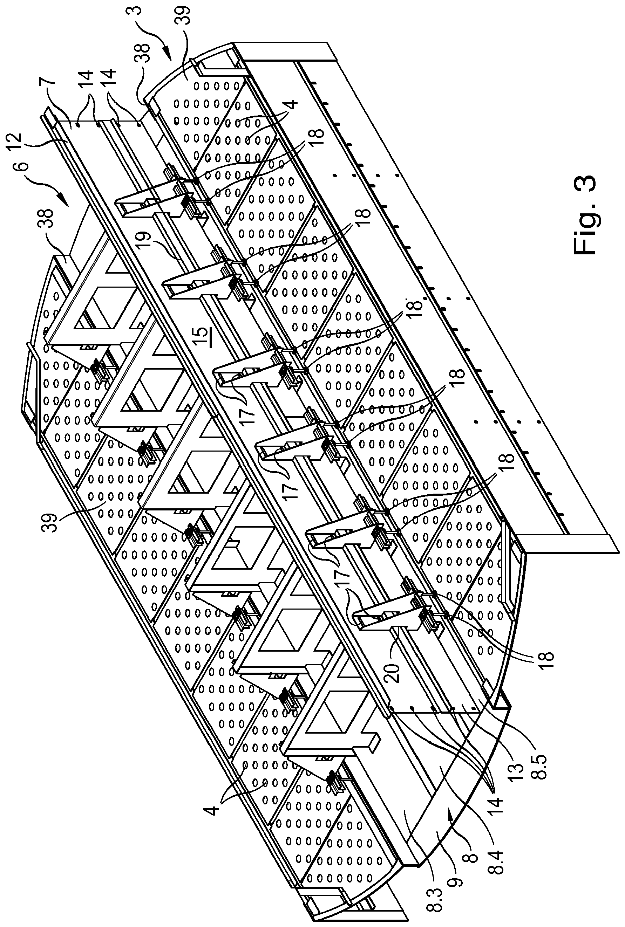

In Fig. 3 sind der untere Kolonnenboden 3 und Teile des zentralen Ablaufschacht 6 des oberen Kolonnenbodens 2 des Bausatzes 1 aus Fig. 1 in perspektivische Darstellung gezeigt. Der Übersichtlichkeit halber ist die hintere Ablaufschachtwand des zentralen Ablaufschacht 6 nicht dargestellt. Der untere Kolonnenboden 3 weist im Bereich des zentralen Ablaufschacht 6 eine vertiefte Einlaufzone 8, bzw. eine Einlauftasse auf, die aus drei Segmenten 8.3, 8.4, 8.5 zusammengesetzt ist. An die vertiefte Einlaufzone 8 schließen sich die Stoffaustauschbereiche 39 des unteren Kolonnenbodens 3 an. Diese Stoffaustauschbereiche 39 sind ebenfalls aus mehreren Segmenten zusammengesetzt und als Siebböden ausgebildet und weisen Gasdurchtrittsöffnungen 4 auf. Die einzelnen Segmente der vertieften Einlaufzonen 8 des unteren Kolonnenbodens 3 und des oberen Kolonnenbodens 2 als auch die einzelnen Segmente der Stoffaustauschbereiche 37 des oberen Kolonnenbodens 2 und der Stoffaustauschbereiche 39 des unteren Kolonnenbodens 3 sind in bekannter Weise miteinander verbunden.

Der Boden 9 der vertieften Einlaufzonen 8 sowohl des oberen Kolonnenbodens 2 als auch des unteren Kolonnenbodens 3 ist im Vergleich zu den daran anschließenden Stoffaustauschbereichen 37 des oberen Kolonnenbodens 2 und den Stoffaustauschbereichen 39 des unteren Kolonnenbodens 3 nach unten abgesetzt und über seitliche Wände 38 mit den daran anschließenden Stoffaustauschbereichen 37 bzw. 39 verbunden.

Wie aus den Figuren 2 und 3 ersichtlich, ist jede Ablaufschachtwand 7 des zentralen Ablaufschachts 6 sowie jede Ablaufschachtwand 11 der seitlichen Ablaufschächte 10 in ihrer Längsrichtung im oberen Bereich abgewinkelt, sodass eine Auflage 12 ausgebildet ist, auf der der obere Kolonnenboden 2 bzw. der untere Kolonnenboden 3 aufliegt und befestigt ist, beispielsweise mit Schrauben.

Jede Ablaufschachtwand 7 des zentralen Ablaufschacht 6 ist im Wesentlichen rechteckig ausgebildet. Entlang ihrer kurzen Seiten 13, die in Längsrichtung der Kolonne verlaufen, weist jeder Ablaufschachtwand 7 Befestigungsmöglichkeiten zur Befestigung an der Kolonne auf. Im dargestellten Fall sind Befestigungsöffnungen 14 vorgesehen, mit denen jede Ablaufschachtwand 7 am Inneren der Kolonnenwandung befestigt werden kann. So kann beispielsweise vorgesehen werden, dass im Inneren der Kolonne Längsstreben angeschweißt sind, an die die Ablaufschachtwände 7 mittels der Befestigungsöffnungen 14 angeschraubt sind. An den Außenseiten 15 der Ablaufschachtwände 7 sind die Kolonneneinbautenbefestigungswinkel 16 angebracht. Die Kolonneneinbautenbefestigungswinkel 16 sind mit mindestens einer ersten Befestigungsstellen 17 an den Außenseiten 15 der Ablaufschachtwände 7 befestigt. In Fig. 3 sind für jeden Kolonneneinnbautenbefestigungswinkel 16 drei erste Befestigungsstellen 17 gezeigt. Zudem weisen die Kolonneneinbautenbefestigungswinkel 16 jeweils mindestens eine zweite Befestigungsstelle 18 auf, über die sie mit dem unteren Kolonnenboden 3 bzw. mit den einzelnen Segmenten der Stoffaustauschbereiche 39 des unteren Kolonnenbodens 3 verbunden sind. In Fig. 3 sind für jeden Kolonneneinbautenbefestigungswinkel 16 zwei zweite Befestigungsstelle 18 gezeigt. Zudem ist an den Außenseiten 15 der Ablaufschachtwände 7 eine Längsstrebe 19 angebracht. Die Kolonneneinbautenbefestigungswinkel 16 weisen Aussparungen 20 auf, durch die die Längsstrebe 19 hindurch geführt ist. Im Inneren des zentralen Ablaufschachtes 6 sind Querstreben 21 angebracht. Die Querstreben 21 verlaufen im Wesentlichen rechtwinklig zur Längserstreckung des Ablaufschachtes 6 und sind mit den Ablaufschachtwänden 7 verbunden, beispielsweise verschraubt. Die Querstreben 21 sind im dargestellten Beispiel an den Innenseiten der Ablaufschachtwände 7 an der Position angeordnet, an der auf der Außenseite 15 der Ablaufschachtwände 7 jeweils die Kolonneneinbautenbefestigungswinkel 16 angebracht sind. Wie dargestellt, ist der untere Kolonnenboden 3 mit mehreren Kolonneneinbautenbefestigungswinkeln 16, im dargestellten Fall sechs Kolonneneinbautenbefestigungswinkel 16, an jeder Ablaufschachtwand 7 befestigt. Je nach Anwendungsfall können mehr oder weniger Kolonneneinbautenbefestigungswinkel verwendet werden.

Der obere Kolonnenboden 2 ist in gleicher Weise mit den Ablaufschachtwänden 11 der seitlichen Ablaufschächte 10 des darüber liegenden unteren Kolonnenbodens 3 eines weiteren Bausatzes verbunden. Die seitlichen Ablaufschächte weisen allerdings keine Querstreben auf, sondern die Verstärkungsstützen 36, die an den Innenseiten der Ablaufschachtwände 11 an der Stelle angebracht sind, an der auf der Außenseite der Ablaufschachtwände 11 die Kolonneneinbautenbefestigungswinkel 16 angeordnet sind.

Im Folgenden wird kurz die Funktionsweise des unteren Kolonnenbodens 3 und des darüber angeordneten oberen Kolonnenbodens 2 beschrieben. Im Betrieb der Kolonne strömt von unten ein Gas durch die Kolonne und die darin befestigten Bausätze 1 mit den unteren Kolonnenböden 3 und den oberen Kolonnenböden 2. Von oben wird eine Flüssigkeit auf die Kolonnenböden 2, 3 aufgegeben. Auf dem oberen Kolonnenbodens 2 trifft die Flüssigkeit durch die seitlichen Ablaufschächte 10 auf die vertieften Einlaufzonen 8 auf. Sobald ein Flüssigkeitsniveau erreicht ist, dass die Höhe der seitlichen Wand 38 der vertieften Einlaufzonen 8 übersteigt, strömt die Flüssigkeit über die Stoffaustauschbereiche 37 des oberen Kolonnenbodens 2. Das Gas strömt durch die Gasdurchtrittsöffnungen 4 und kommt mit der Flüssigkeit in Kontakt. Die Flüssigkeit strömt hin zum zentralen Ablaufschacht 6 und wird über den zentralen Ablaufschacht 6 auf den unteren Kolonnenboden 3 gegeben. Dort tritt die Flüssigkeit in die vertieften Einlaufzone 8 bis ein gewisses Niveau erreicht ist und strömt dann über die Stoffaustauschbereiche 39 des unteren Kolonnenbodens 3. Durch die Gasdurchtrittsöffnungen 4 strömt Gas durch den unteren Kolonnenboden 3 und kommt ebenfalls mit der Flüssigkeit in Kontakt. Die Flüssigkeit strömt dann nach außen zu den seitlichen Ablaufschächte 10 und strömt dort hinunter auf den darunter angeordneten oberen Kolonnenbodens 2 eines weiteren Bausatzes 1.

Dieses Beispiel beschreibt zweiflutige Kolonnenböden. Die Kolonneneinbautenbefestigungswinkel können aber auch für einflutige Kolonnenböden, bei denen jeder Kolonnenboden nur einen seitlichen Ablaufschacht aufweist, verwendet werden.

Ebenso ist der Einsatz der Kolonneneinbautenbefestigungswinkel bei mehrflutigen Kolonnenböden, z. B. 4-flutigen Kolonnenböden, möglich. Auf die vertiefte Einlaufzone der Kolonnenböden kann gegebenenfalls verzichtet werden.

Fig. 4 zeigt einen Kolonneneinbautenbefestigungswinkel 16 aus dem Bausatz 1 aus Fig. 1. Der Kolonneneinbautenbefestigungswinkel 16 kann sowohl zur Befestigung eines oberen Kolonnenbodens 2 an der Ablaufschachtwand 11 eines seitlichen Ablaufschachts 10 verwendet werden, als auch zur Befestigung eines unteren Kolonnenbodens 3 an den Ablaufschachtwänden 7 eines zentralen Ablaufschachts 6. Der Kolonneneinbautenbefestigungswinkel 16 umfasst einen Körper 22 mit einem Rücken 23 und zwei Schenkeln 24. Der Rücken 23 ist einteilig mit den Schenkeln 24 ausgebildet, wobei die Schenkel 24 rechtwinklig zum Rücken 23 angeordnet sind. Vorzugsweise ist der Körper 22 als Blechbiegeteil ausgebildet. Im Rücken 23 des Körpers 22 sind die ersten Befestigungsstellen 17 ausgebildet. Im dargestellten Ausführungsbeispiel sind dies drei Langlöcher. Ferner ist im Rücken 24 die Aussparung 20 ausgebildet. Die Aussparung 20 erstreckt sich bis in die Schenkel 24 hinein.

In einem unteren Bereich der Schenkel 24 sind in den Schenkeln 24 zwei abgekantete horizontale Träger 25 angeordnet. Dazu sind in jedem der Schenkel 24 zwei L-förmige Aussparungen vorgesehen, in die die L-förmigen abgekanteten horizontalen Träger 25 eingesteckt sind. Die horizontalen Träger 25 können mit den Schenkeln 24 fest verbunden, beispielsweise verschweißt, sein. Die beiden horizontalen Träger 25 sind beabstandet voneinander angeordnet, so dass zwischen ihnen ein Schlitz 26 ausgebildet ist. In diesem Schlitz 26 ist benachbart zu jedem Schenkel 24 eine Schraube 27 angeordnet. Die Schrauben 27 sind außerhalb des Körpers 22 angeordnet. Die horizontalen Träger 25 erstrecken sich auch auf der Außenseite der Schenkel 24 noch über einen gewissen Abstand. Mithilfe von ersten Muttern 28 und Unterlegscheiben 29 sind die Schrauben 27 in dem Schlitz 26 befestigt. Durch Lösen der Muttern 28 können die Schrauben 27 in dem Schlitz 26 zwischen den beiden horizontalen Trägern 25 hin und her bewegt werden und in eine gewünschte horizontale Position verschoben werden. Dort werden die Muttern 28 fest gezogen und die Schrauben 27 in der gewünschten horizontalen Position fixiert. Die Schrauben 27 erstrecken sich unterhalb der horizontalen Träger 25 nach unten und weisen dort mindestens zwei zweite Muttern 30 auf. Im eingebauten Zustand der Kolonneneinbautenbefestigungswinkel 16 ist zwischen den zweiten Muttern 30 der obere Kolonnenboden 2 bzw. der untere Kolonnenboden 3 angeordnet. Die zweiten Muttern 30 werden dann auf den Schrauben 27 verschoben, bis die jeweils gewünschte vertikale Position des oberen Kolonnenbodens 2 bzw. des unteren Kolonnenbodens 3 an dieser Position eingestellt ist und somit der vertikale Abstand zwischen den ersten Befestigungsstellen 17 und den zweiten Befestigungsstellen 18 eingestellt und der Kolonnenboden so in horizontaler Richtung ausgerichtet ist. Die Schrauben 27 mit den darauf angeordneten Muttern 38, 30 bilden die zweiten Befestigungsstellen 18 aus. Es sind also zwei zweite Befestigungsstellen 18 vorgesehen. Es sind auch mehr oder weniger zweite Befestigungsstellen möglich.

Der Kolonneneinbautenbefestigungswinkel 16 kann für einflutige oder mehrflutige Kolonnenböden verwendet werden. Auf die Aussparung im Rücken des Kolonneneinbautenbefestigungswinkels kann auch verzichtet werden.

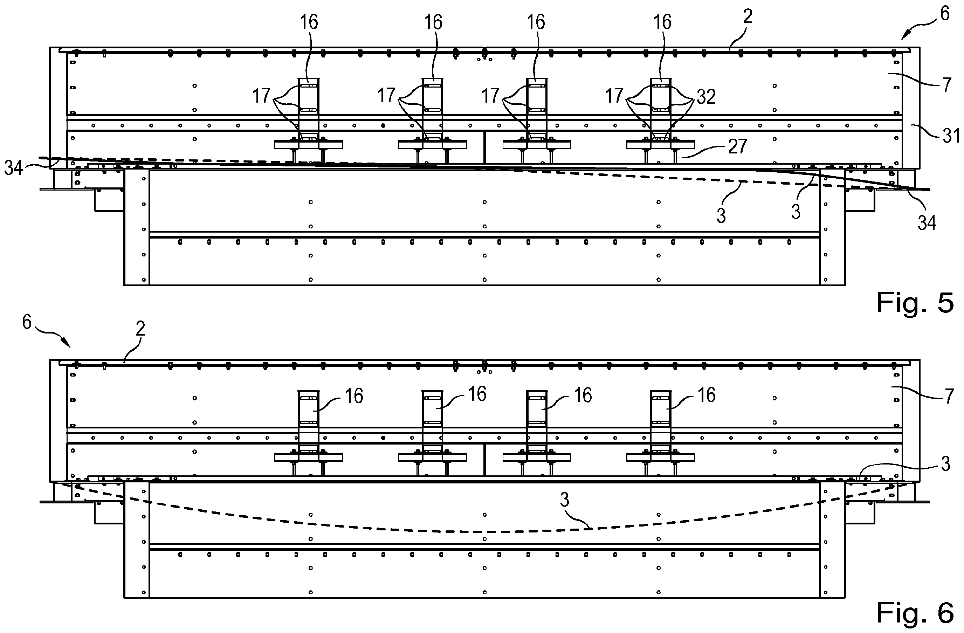

Die Funktionsweise der Kolonneneinbautenbefestigungswinkel 16 wird nun im Folgenden mit mithilfe der Figuren 5 und 6 genauer erläutert.

Fig. 5 zeigt eine Seitenansicht eines Bausatzes 1 parallel zu den Ablaufschächten im in der Kolonne eingebauten Zustand. Die Ablaufschachtwände 7 des zentralen Ablaufschacht 6 sind an fest mit der Kolonnenwandung verbundenen Längsstreben 31 angebracht, beispielsweise angeschraubt. Auf der Oberseite der Ablaufschachtwände 7 liegt der obere Kolonnenbodens 2 auf. An den Außenseiten der Ablaufschachtwände 7 sind die Kolonneneinbautenbefestigungswinkel 16 angebracht. In Fig. 5 sind vier Kolonneneinbautenbefestigungswinkel 16 gezeigt. Jeder Kolonneneinbautenbefestigungswinkel 16 weist in seinem Rücken drei horizontale Langlöcher auf, die die ersten Befestigungsstellen 17 ausbilden. In jedem Langloch 31 ist eine Schraube 32 angeordnet, die sich durch eine Bohrung in der Ablaufschachtwand 7 erstreckt. Bevor die Schraube 32 fest angezogen wird, wird der Kolonneneinbautenbefestigungswinkel 16 in die gewünschte horizontale Position gebracht. Durch Anziehen der Schraube 32 wird der Kolonneneinbautenbefestigungswinkel 16 in dieser Position fixiert. Die beiden Schrauben 27 eines Kolonneneinbautenbefestigungswinkels 16 bilden zusammen mit den darauf angeordneten zweiten Muttern 30 jeweils die zweite Befestigungsstelle 18 aus, an der der Kolonneneinbautenbefestigungswinkel 16 mit dem unteren Kolonnenboden 3 verbunden wird. Dazu werden die Schrauben 27 in Befestigungsöffnungen im unteren Kolonnenboden 3 angebracht, sodass eine der zweiten Muttern 30 oberhalb des unteren Kolonnenbodens 3 liegt und eine weitere der zweiten Muttern 30 unterhalb des unteren Kolonnenbodens 3 liegt. Die zweiten Muttern 30 werden auf den Schrauben 27 so positioniert, dass der untere Kolonnenboden 3 in die gewünschte Position gebracht und so in horizontaler Richtung nivelliert wird. In Fig. 5 ist gezeigt, wie ein unterer Kolonnenboden 3, der auf einem schiefen Tragring 41 aufliegt, durch die Kolonneneinbautenbefestigungswinkel 16 trotzdem in horizontaler Richtung nivelliert werden kann. Die gestrichelte Linie zeigt die Position des unteren Kolonnenbodens 3, wenn keine zusätzliche Befestigung durch die Kolonneneinbautenbefestigungswinkel 16 vorgesehen ist. In diesem Fall ist der untere Kolonnenboden 3 auf der linken Seite deutlich höher als auf der rechten Seite, sodass der untere Kolonnenboden 3 über den Kolonnenquerschnitt schräg angeordnet ist. In diesem Fall wäre keine gleichmäßige Flüssigkeitsverteilung über den unteren Kolonnenboden 3 möglich. Mithilfe der Kolonneneinbautenbefestigungswinkel 16 ist es möglich, den unteren Kolonnenboden 3 zumindest einem großen mittleren Bereich nach oben zu ziehen bzw. nach unten zu drücken, sodass zumindest im mittleren Bereich eine horizontale Nivellierung des unteren Kolonnenbodens 3 realisiert werden kann. Dies geschieht dadurch, dass durch die geeignete Wahl der Position der beiden zweiten Muttern 30 auf den jeweiligen Schrauben 27 der untere Kolonnenboden 3 an der jeweiligen Position nach oben gezogen bzw. nach unten gedrückt wird. In Fig. 5 ist der untere Kolonnenboden 3 nach der Nivellierung durch eine durchgezogene Linie gekennzeichnet. Somit wird hier wieder eine gleichmäßige Flüssigkeitsverteilung gewährleistet.

In Fig. 6 ist ein Beispiel gezeigt, indem der untere Kolonnenboden 3 in der Mitte der Kolonne durchhängt (gestrichelte Linie). Dies kann beispielsweise bei Kolonnen mit großem Durchmesser der Fall sein. Auch hier wäre keine gleichmäßige Flüssigkeitsverteilung auf dem unteren Kolonnenboden 3 gewährleistet. Auch hier können Kolonneneinbautenbefestigungswinkel 16 verwendet werden, um den unteren Kolonnenboden 3 in horizontaler Richtung zu nivellieren und in die gewünschte horizontale Position zu bringen. Mithilfe der Schrauben 27 und der darauf angeordneten zweiten Muttern 30 wird der untere Kolonnenboden 3 nun nach oben gezogen. In den äußeren Bereichen des unteren Kolonnenbodens 3, die nahe an der Kolonnenwand liegen, ist dafür nur ein geringerer Betrag notwendig, in der Mitte muss der untere Kolonnenboden 3 stärker nach oben gezogen werden. Durch die Kolonneneinbautenbefestigungswinkel 16 kann also ein Durchhängen des unteren Kolonnenbodens 3 vermieden werden. Die Position des unteren Kolonnenbodens 3 nach der Nivellierung ist durch die durchgezogene Linie dargestellt. Der obere Kolonnenboden 2 liegt auf den Ablaufschachtwänden 7 des zentralen Ablaufschachts 6 auf. Beim Einbau wird der zentrale Ablaufschacht 6 horizontal ausgerichtet. Durch die Befestigungen direkt an der Kolonneninnenwand ist der zentrale Ablaufschacht 6 sehr stabil und kann auch den oberen Kolonnenboden 2 tragen.

Dennoch kann auch eine zusätzliche Befestigung des jeweils oberen Kolonnenbodens 2 an dem unteren Kolonnenboden 3 eines darüber angeordneten Bausatzes 1 vorgesehen werden, wie in den Figuren 1-3 gezeigt. Es kann auch vorgesehen werden, dass die Kolonneneinbautenbefestigungswinkel keinerlei Verstellmöglichkeit aufweisen. Die Kolonneneinbautenbefestigungswinkel sind dennoch vorteilhaft, da sie die Befestigung der Kolonnenböden an den Ablaufschächten stabilisieren und so den Einsatz von Querträgern zur Verstärkung an den Kolonnenböden überflüssig machen.

Wie bereits beschrieben, ist es auch möglich, die Kolonneneinbautenbefestigungswinkel an den Innenseiten der Ablaufschachtwände anzubringen.

### Bezugszeichenliste

- 1: Bausatz
- 2: oberer Kolonnenboden
- 3, 3': unterer Kolonnenboden
- 4: Gasdurchtrittsöffnung
- 6: zentraler Ablaufschacht
- 7: Ablaufschachtwände des zentralen Ablaufschachts
- 8: vertiefte Einlaufzone
- 8.1: erstes Segment vertiefte Einlaufzone oberer Kolonnenboden
- 8.2: zweites Segment vertiefte Einlaufzone oberer Kolonnenboden
- 8.3: erstes Segment vertiefte Einlaufzone unterer Kolonnenboden
- 8.4: zweites Segment vertiefte Einlaufzone unterer Kolonnenboden
- 8.5: drittes Segment vertiefte Einlaufzone unterer Kolonnenboden
- 9: Boden der vertieften Einlaufzone
- 10, 10': seitlicher Ablaufschacht
- 11, 11': Ablaufschachtwand seitlicher Ablaufschacht
- 12: Auflage
- 13: seitliche Enden Ablaufschachtwand
- 14: Befestigungsöffnung
- 15: Außenseite Ablaufschachtwand
- 16: Kolonneneinbautenbefestigungswinkel
- 17: erste Befestigungsstelle
- 18: zweite Befestigungsstelle
- 19: Längsstrebe
- 20: Aussparung
- 21: Querstrebe
- 22: Körper
- 23: Rücken
- 24: Schenkel
- 25: horizontaler Träger
- 26: Schlitz
- 27: Schrauben
- 28: erste Mutter
- 29: Unterlegscheibe
- 30: zweite Mutter
- 31: Längsstrebe
- 32: Langloch
- 33: Schraube
- 34: Tragring
- 36: Verstärkungsstützen
- 37: Stoffaustauschbereich oberer Kolonnenboden
- 38: seitliche Wand vertiefte Einlaufzone
- 39: Stoffaustauschbereich unterer Kolonnenboden

## Patentansprüche

1. Bausatz (1) zum Einbau von zwei Kolonnenböden (2, 3) in eine Kolonne mit einem oberen Kolonnenboden (2; 3), der mindestens einen Ablaufschacht (6; 10) mit mindestens einer Ablaufschachtwand (7; 11) aufweist, und mit einem unteren Kolonnenboden (3; 2), der vertikal beabstandet unter dem oberen Kolonnenboden (2; 3) angeordnet und mit diesem verbunden ist, **dadurch gekennzeichnet, dass** mindestens ein Kolonneneinbautenbefestigungswinkel (16), der mindestens eine erste Befestigungsstelle (17), mindestens eine zweite Befestigungsstelle (18) und eine Einstelleinrichtung zum Einstellen eines vertikalen Abstands zwischen der mindestens einen ersten Befestigungsstelle (17) und der mindestens einen zweiten Befestigungsstelle (18) aufweist, mit der mindestens einen ersten Befestigungsstelle (17) an der Ablaufschachtwand (7; 11) befestigt ist und mit der mindestens einen zweiten Befestigungsstelle (18) mit dem unteren Kolonnenboden (3, 2) verbunden ist.

2. Bausatz (1) nach Anspruch 1, **dadurch gekennzeichnet, dass** eine vertikale Position der mindestens einen ersten Befestigungsstelle (17) oder der mindestens einen zweiten Befestigungsstelle (18) des Kolonneneinbautenbefestigungswinkels (16) festgelegt ist und die jeweils mindestens eine andere Befestigungsstelle (18; 17) des Kolonneneinbautenbefestigungswinkels (16) in vertikaler Richtung verschiebbar ist.

3. Bausatz (1) nach einem der Ansprüche 1 oder 2, **dadurch gekennzeichnet, dass** die Einstelleinrichtung des Kolonneneinbautenbefestigungswinkels (16) mindestens ein erstes Element aufweist, auf dem mindestens ein zweites Element in vertikaler Richtung verschiebbar angeordnet ist, und das mindestens eine zweite Element in verschiedenen vertikalen Positionen feststellbar ist.

4. Bausatz (1) nach einem der Ansprüche 1-3, **dadurch gekennzeichnet, dass** die Einstelleinrichtung des Kolonneneinbautenbefestigungswinkels (16) mindestens eine vertikal angeordnete Schraube (27) umfasst, auf der mindestens zwei zweite Muttern (30) angeordnet sind.

5. Bausatz (1) nach einem der Ansprüche 1-4, **dadurch gekennzeichnet, dass** eine horizontale Position der mindestens einen ersten Befestigungsstelle (17) und/oder der mindestens einen zweiten Befestigungsstelle (18) des Kolonneneinbautenbefestigungswinkels (16) einstellbar ist.

6. Bausatz (1) nach einem der Ansprüche 1-5, **dadurch gekennzeichnet, dass** der Kolonneneinbautenbefestigungswinkel (16) mehrere erste und/oder mehrere zweite Befestigungsstellen (17,18) aufweist.

7. Bausatz (1) nach einem der Ansprüche 1-6, **dadurch gekennzeichnet, dass** der Kolonneneinbautenbefestigungswinkel (16) einen Rücken (23) und mindestens einen mit dem Rücken (23) verbundenen Schenkel (24) umfasst, wobei die mindestens eine erste Befestigungsstelle (17) im Rücken (23) und die mindestens eine zweite Befestigungsstelle (18) am Schenkel (24) ausgebildet ist.

8. Bausatz (1) nach Anspruch 7, **dadurch gekennzeichnet, dass** im Rücken (24) des Kolonneneinbautenbefestigungswinkels (16) eine Aussparung (20) zur Aufnahme einer Längsstrebe (19) ausgebildet ist.

9. Bausatz (1) nach einem der Ansprüche 7 oder 8, **dadurch gekennzeichnet, dass** der mindestens eine Schenkel (24) des Kolonneneinbautenbefestigungswinkels (16) mit zwei beabstandet zueinander angeordneten horizontalen Trägern (25) verbunden ist, die einen Teil der mindestens einen zweiten Befestigungsstelle (18) ausbilden.

10. Bausatz (1) nach einem der Ansprüche 1-9, **dadurch gekennzeichnet, dass** der untere Kolonnenboden (3;2) mit einer Mehrzahl von Kolonneneinbautenbefestigungswinkeln (16) an der Ablaufschachtwand (6;11) befestigt ist.

11. Bausatz (1) nach einem der Ansprüche 1-10, **dadurch gekennzeichnet, dass** der mindestens eine Ablaufschacht (6) mittig im oberen Kolonnenboden (2) angeordnet ist und zwei Ablaufschachtwände (7) aufweist und an jeder Ablaufschachtwand (7) jeweils mindestens ein Kolonneneinbautenbefestigungswinkel (16) angeordnet ist und den unteren Kolonnenboden (3) mit dem mindestens einen Ablaufschacht (6) verbindet.

12. Bausatz (1) nach einem der Ansprüche 1-11, **dadurch gekennzeichnet, dass** im Inneren des mindestens einen Ablaufschachts (6) mindestens eine Querstrebe (21) angeordnet ist und der mindestens eine Kolonneneinbautenbefestigungswinkel (16) in Verlängerung der mindestens einen Querstrebe (21) an einer Außenseite der mindestens einen Ablaufschachtwand (7) befestigt ist.

13. Bausatz (1) nach einem der Ansprüche 1-12, **dadurch gekennzeichnet, dass** die Kolonnenböden (2, 3) unterhalb des Ablaufschachtes (6) eine vertiefte Einlaufzone (8) ausbilden.

14. Bausatz (1) nach einem der Ansprüche 1-13, **dadurch gekennzeichnet, dass** der mindestens eine Ablaufschacht (6) an seinen der Kolonne zugewandten Enden Befestigungspunkte (14) zur Befestigung an der Kolonne aufweist.

15. Kolonneneinbautenbefestigungswinkel (16) mit mindestens einer ersten Befestigungsstelle (17) zur Befestigung an einem oberen Kolonnenboden, mindestens einer zweiten Befestigungsstelle (18) zur Befestigung an einem unteren Kolonnenboden und einer Einstelleinrichtung zur Einstellung eines vertikalen Abstands zwischen der mindestens einen ersten Befestigungsstelle (17) und der mindestens einen zweiten Befestigungsstelle (18) zur Verwendung in einem Bausatz (1) nach einem der Ansprüche 1 bis 14.

16. Stoffaustauschkolonne mit mindestens einem im Kolonneninneren befestigten Bausatz (1) nach einem der Ansprüche 1-14.
